# EUROPÄISCHE PATENTSCHRIFT

(11) **EP 3 309 699 B1**
(45) Veröffentlichungstag und Bekanntmachung des Hinweises auf die Patenterteilung: **11.12.2019**
(21) Anmeldenummer: 17195737.6
(22) Anmeldetag: 10.10.2017
(51) Int. Cl.: G06F 21/44, G06F 21/57, G06F 21/70, G06F 21/85, G06F 21/82, G06F 21/88

(54) **SYSTEM AUS KOMMUNIKATIONSEINHEIT UND ZUSATZGERÄT MIT SICHERUNGSMITTEL AN DER SCHNITTSTELLE**
SYSTEM FROM COMMUNICATION UNIT AND PERIPHERAL DEVICE WITH PROTECTED INTERFACE
SYSTÈME DE L'UNITÉ DE COMMUNICATION ET DISPOSITIF PÉRIPHÉRIQUE AVEC INTERFACE PROTÉGÉE

(30) Priorität: 11.10.2016 DE 102016219756
(43) Veröffentlichungstag der Anmeldung: 18.04.2018
(73) Patentinhaber: Power Plus Communications AG, 68167 Mannheim (DE)
(72) Erfinder: Mayer, Eugen, 68305 Mannheim (DE); Rindchen, Markus, 67574 Osthofen (DE)
(74) Vertreter: Patent- und Rechtsanwälte Ullrich & Naumann

(56) Entgegenhaltungen:
- EP-A1- 2 958 047
- WO-A1-2012/106049
- WO-A1-2013/117404
- DE-U1-202005 004 352
- US-B1- 7 877 788

## Beschreibung

Die vorliegende Erfindung betrifft eine Kommunikationseinheit zum Bereitstellen einer Kommunikationsfunktion, wobei die Kommunikationseinheit ein SmartMeter-Gateway ist und die bereitgestellte Kommunikationsfunktion das Steuern der Kommunikation zwischen mehreren mit der Kommunikationseinheit verbundenen Netzwerke umfasst und wobei die Kommunikationseinheit mindestens eine Schnittstelle aufweist, die einen Datenaustausch mit einem mittels einer Steckverbindung verbindbaren Zusatzgerät ermöglicht. Die vorliegende Erfindung betrifft ferner ein System mit einer derartigen Kommunikationseinheit und einem Zusatzgerät.

In der Praxis sind Geräte bekannt, die einer Zertifizierung unterzogen werden müssen, bevor sie vertrieben und/oder genutzt werden dürfen. Während des Zertifizierungsverfahrens wird die Funktionsweise der Hard- und/oder Software hinsichtlich des Einhaltens einschlägiger Vorschriften überprüft. Derartige Geräte sind insbesondere Kommunikationseinheiten, wie beispielsweise ein SmartMeter-Gateway (SMGW), das in einem intelligenten Messsystem verschiedene Netzwerke miteinander verbindet und den Zugriff auf verbundene Geräte und/oder verfügbare Daten steuert. Bei der Zertifizierung eines SMGWs wird das Einhalten der einschlägigen Sicherheitsvorschriften geprüft. In Deutschland sind dies zwei Schutzprofile und eine Technische Richtlinie (TR) des BSI (Bundesamt für Sicherheit in der Informationstechnik) sowie ein Lastenheft des FNN (Forum Netztechnik/Netzbetrieb). Die Netze, die das SMGW miteinander verbindet, sind ein LMN (Local Metrological Network) zum Anschluss von Messknoten, ein HAN (Home Area Network) für Kundengeräte und ein WAN (Wide Area Network) für einen Zugriff "von außen" (beispielsweise durch einen Energieversorger).

Nachteilig an derartige Geräten ist, dass nach einer abgeschlossenen Zertifizierung die meisten Änderungen an Hard- und/oder Software eine Neuzertifizierung des gesamten Gerätes erforderlich machen. Dadurch sind schnelle Änderungen der Hard- und/oder Software praktisch unmöglich. Ein Ansatz zur Lösung dieser Problematik besteht darin, das elektrische Gerät in zertifizierungsbedürftige und nicht-zertifizierungsbedürftige Komponenten zu unterteilen. Ein Beispiel einer derartigen Struktur eines SMGWs ist in der EP 2 709 374 A2 offenbart. Durch diese Aufteilung ist es möglich, dass die nicht-zertifizierungsbedürftigen Komponenten ohne Verlust der Zertifizierung verändert werden können.

Denkbar wäre auch die Verwendung flexibler universeller Schnittstellen, an die Zusatzgeräte, wie beispielsweise Schnittstellenadapter für Ethernet oder Mobilfunknetze angeschlossen werden können. Eine solche Schnittstelle könnte beispielsweise USB (Universal Serial Bus) sein. Nachteilig an derartigen Schnittstellen ist jedoch das damit verbundene, relativ große Sicherheitsrisiko. Da diese Schnittstellen für eine besonders einfache und universelle Ansteuerung einer großen Anzahl verschiedener Geräte ausgebildet sind, sind keine ausgeprägten Sicherungsmaßnahmen vorhanden, so dass die potentiellen Angriffsszenarien sehr vielfältig sind. Damit bildet der große Vorteil dieser Schnittstellen in dem vorliegenden Zusammenhang gleichzeitig einen erheblichen Nachteil, so dass derartige universelle Schnittstellen für die in Rede stehenden Kommunikationseinheiten nicht verwendbar sind.

Die WO 2012/106049 A1 offenbart eine Sicherheitseinrichtung, durch die der USB-Protokoll-Stack eines USB-Host-Systems erweitert ist. Hierzu wird in einem erweiterten USB-Protokoll-Stack ein Sicherheitssteuermodul eingefügt. Wenn ein neues USB-Gerät angeschlossen wird, werden in einem Initialisierungsschritt Informationen über das neue USB-Gerät bezogen. Mittels einer Anwendungsschnittstelle wird geprüft, ob ein Zugriff auf das USB-Gerät sicher ist oder nicht. Erst wenn das USB-Gerät als sicher eingestuft worden ist, wird die Kommunikation mit dem USB-Gerät freigegeben. Bis zu diesem Moment ist die Kommunikation unterbunden. Ein User kann über eine Konfigurationsschnittstelle Einfluss auf das Verhalten der Sicherungseinrichtung nehmen.

Aus der WO 2013/117404 A1 ist ein Verfahren zur Personalisierung eines Sicherheitsmoduls eines SmartMeters oder eines SmartMeter-Gateways bekannt. Kern ist dabei das Erzeugen und Verteilen der Schlüssel an ein Sicherheitsmodul, das untrennbar mit dem SmartMeter bzw. SmartMeter-Gateway verbunden ist. Das Sicherheitsmodul ist in einem initialen Zustand derart konfiguriert, dass eine Kommunikation lediglich mit einer vertrauenswürdigen Instanz möglich ist. Mittels der vertrauenswürdigen Instanz werden Konfigurationen in dem Sicherheitsmodul und/oder dem zugehörigen SmartMeter bzw. SmartMeter-Gateway durchgeführt.

Der vorliegenden Erfindung liegt die Aufgabe zugrunde, eine Kommunikationseinheit der eingangs genannten Art derart auszugestalten und weiterzubilden, dass Teilfunktionen der Kommunikationseinheit austauschbar sind, ohne die Sicherheit der Kommunikationseinheit zu gefährden und dennoch einen Manipulationsschutz zu gewährleisten.

Erfindungsgemäß wird die voranstehende Aufgabe durch die Merkmale des Anspruchs 1 gelöst. Danach ist die in Rede stehende Kommunikationseinheit dadurch gekennzeichnet, dass sich die Kommunikationseinheit bei dem Bereitstellen der Kommunikationsfunktion zumindest teilweise eines über die Schnittstelle verbundenen Zusatzgeräts bedient und dass mindestens ein Sicherungsmittel bereitgestellt ist, das derart mit der Kommunikationseinheit zusammenwirkt, dass ein unberechtigtes Anschließen und/oder Trennen eines Zusatzgeräts an der Schnittstelle verhindert oder zumindest erschwert wird.

Ferner löst das System nach den Merkmalen des Anspruchs 10 die voranstehende Aufgabe. Dieses System umfasst eine Kommunikationseinheit sowie ein Zusatzgerät, die gemeinsam eine Kommunikationsfunktion bereitstellen.

In erfindungsgemäßer Weise ist zunächst erkannt worden, dass - trotz der prinzipiell vorhandenen Sicherheitsproblematiken - dennoch universelle Schnittstellen verwendet werden können, um eine Austauschbarkeit von Kommunikationsfunktionen auch bei zertifizierungsbedürftigen Kommunikationseinheiten bereitzustellen. Denn derartige Schnittstellen erlauben eine besonders einfache Auslagerung von zumindest Teilen der Kommunikationsfunktion der Kommunikationseinheit in ein über die Schnittstelle verbundenes Zusatzgerät. Wenn dieses Zusatzgerät über zertifizierte Soft- und/oder Hardware angesteuert wird, kann das Zusatzgerät einfach und ohne Verlust der Zertifizierung der Kommunikationseinheit ausgetauscht werden. Zum Beheben oder zumindest zum erheblichen Abmildern der Sicherheitsproblematiken wird weiter erfindungsgemäß mindestens ein Sicherungsmittel bereitgestellt, das ein unberechtigtes Anschließen und/oder Trennen eines Zusatzgeräts an der Schnittstelle verhindert oder zumindest erschwert. Auf diese Weise entsteht ein System aus Kommunikationseinheit und Zusatzgerät, das sich auch bei der Handhabung schützenswerter Daten einsetzen lässt. Dabei können auch mehrere unterschiedliche Sicherheitsmittel kombiniert werden, so dass sich der schützende Effekt der einzelnen Sicherungsmittel gegenseitig verstärken.

Durch das Sicherungsmittel kann ein versuchsweises Anschließen und/oder Trennen eines Zusatzgeräts wirkungsvoll unterbunden werden, da stets mindestens ein Sicherungsmittel übergangen werden muss. Bei geeigneter Wahl des Sicherungsmittels kann das Anschließen und/oder Trennen des Zusatzgeräts derart erschwert werden, dass erheblicher Aufwand getrieben werden muss, um ein unberechtigtes Zusatzgerät überhaupt in Betrieb zu nehmen. Dabei kann ein Sicherungsmittel derart wirken, dass ein einmal mit der Schnittstelle der Kommunikationseinheit verbundenes Zusatzgerät lediglich dann getrennt werden kann, wenn das Sicherungsmittel übergangen oder zerstört wird. Alternativ oder zusätzlich kann ein Sicherungsmittel das Anschließen eines nicht zulässigen Zusatzgeräts unterbinden und/oder den Betrieb eines angeschlossenen unzulässigen Zusatzgeräts verhindern. In allen Fällen wirken die Sicherungsmittel derart auf das System aus Kommunikationseinheit und Zusatzgerät ein, dass Sicherheitsrisiken durch den unberechtigten Anschluss potentiell sicherheitsgefährdender Zusatzgeräte signifikant reduziert oder gar vollständig eliminiert werden.

Der Begriff "Zusatzgerät" ist dahingehend zu verstehen, dass das Zusatzgerät kein Bestandteil der Kommunikationseinheit ist, sondern extern zu der Kommunikationseinheit angeordnet ist. Dies wird üblicherweise bedeuten, dass Kommunikationseinheit und Zusatzgerät in getrennten Gehäusen untergebracht sind und dass ein von außerhalb der Kommunikationseinheit zugänglicher Steckverbinder einen Zugang zu der Elektronik der Kommunikationseinheit zum Datenaustausch über die Schnittstelle bereitstellt. In den meisten Fällen wird der Steckverbinder an der Kommunikationseinheit durch eine Buchse gebildet sein, während der Steckverbinder an dem Zusatzgerät als korrespondierender Stecker ausgebildet sein wird. Meist dürfte der Stecker des Zusatzgeräts am Ende eines Anschlusskabels angeordnet sein, das eine Verbindung zwischen Stecker und Zusatzgerät herstellt.

Der Begriff "Kommunikationseinheit" ist ebenso allgemein zu verstehen. Prinzipiell könnte die Kommunikationseinheit durch jedes Gerät gebildet sein, das eine Kommunikationsfunktion bereitstellt. Eine Kommunikationsfunktion bedeutet, dass Daten, meist in paketierter Form, mit einem oder mehreren angeschlossenen Geräten ausgetauscht werden. Die ausgetauschten Daten können in der Kommunikationseinheit selbst erzeugt oder dort abgespeichert worden sein. Die ausgetauschten Daten können aber auch von einem anderen Gerät kommen, das mit der Kommunikationseinheit verbunden ist. Die Kommunikationseinheit kann dann auch lediglich koordinierende Aufgaben übernehmen. Entsprechende Kommunikationseinheiten sind aus der Praxis zahlreich bekannt. Besonders gut eignet sich die erfindungsgemäße Lehre für den Einsatz bei Kommunikationseinheiten, die zumindest teilweise einer Zertifizierung unterzogen werden müssen. Bevorzugter Weise kommt die Kommunikationseinheit im Zusammenhang von Messsystemen, insbesondere einem sogenannten SmartMetering-System, zum Einsatz. Eine ganz besonders bevorzugte Kommunikationseinheit ist durch ein SmartMeter-Gateway (SMGW) gebildet, bei dem die bereitgestellte Kommunikationsfunktion das Steuern der Kommunikation zwischen mehreren mit der Kommunikationseinheit verbundenen Netzwerken umfasst. Hierunter fällt auch das Steuern des Zugriffs auf innerhalb der Netzwerke und/oder innerhalb des SMGW vorhandenen Daten.

Auch der Begriff "Steckverbindung" ist ebenso allgemein zu verstehen. Wesentlich hierbei ist, dass Kontakte eines ersten Steckverbinders im gesteckten Zustand eine elektrische Verbindung zu korrespondierenden Kontakten eines zweiten Steckverbinders herstellen. Dabei ist es unerheblich, wie viele Kontakte die Steckverbinder aufweisen und wie die Kontakte gebildet sind. Die jeweilige Ausgestaltung der Kontakte wird vielmehr von der verwendeten Schnittstelle, dem Einsatzszenarium, der Betriebsumgebung, der Datenrate über die Schnittstelle und/oder ähnlichen Randbedingungen abhängen. Ebenso ist unerheblich, wie "fest" die Steckverbindung ist, d.h. ob der erste und der zweite Steckverbinder lediglich zusammengesteckt sind und durch einfachen Zug an einem der Steckverbinder gelöst werden kann oder ob vorher noch ein Verriegelungselement oder mehrere Verriegelungselemente gelöst werden muss/müssen. Geeignete Steckverbindungen sind aus der Praxis hinlänglich bekannt.

Vorzugsweise wirken das mindestens eine Sicherungsmittel mechanisch, elektrisch und/oder logisch. Ein mechanisch wirkendes Sicherungsmittel kann beispielsweise derart mit dem Gehäuse der Kommunikationseinheit zusammenwirken, dass ein Verbindungskabel zwischen der Kommunikationseinheit und dem Zusatzgerät erst nach einer Zerstörung des Sicherungsmittels von der Steckverbindung zu der Schnittstelle der Kommunikationseinheit getrennt werden kann. Auf diese Weise entsteht zumindest eine wirksame psychologische Hürde, das Zusatzgerät von der Kommunikationseinheit zu trennen. Versuchsweises Trennen wird hierdurch in den meisten Fällen verhindert. Ferner wird jegliche Manipulation einer Verbindung zwischen Kommunikationseinheit und Zusatzgerät auf diese Weise erkennbar. Ein mechanisch wirkendes Sicherungsmittel könnte zusätzlich oder alternativ den Zugang zu der Steckverbindung vollständig unterbinden. Es sei darauf hingewiesen, dass in diesem Zusammenhang unter einem mechanisch wirkenden Sicherungsmittel nicht ein speziell ausgestalteter Steckverbinder verstanden wird. Vielmehr soll die Universalität der Steckverbindung nicht beeinflusst werden. So würde beispielsweise eine zusätzliche Codierungsnase an einem der Steckverbinder der Steckverbindung nicht als Sicherungsmittel im Sinne der beanspruchten Lehre aufgefasst.

Elektrisch wirkende Sicherungsmittel wirken derart, dass der Steckverbinder zu der Schnittstelle der Kommunikationseinheit elektrisch deaktiviert wird. Dies kann beispielsweise bedeuten, dass Kommunikationssignale, die ein Zusatzgerät über die Steckverbindung zu der Schnittstelle der Kommunikationseinheit senden möchte, nicht zu der Elektronik der Kommunikationseinheit durchgeleitet werden, sondern elektrisch von der Elektronik getrennt werden. Dies kann aber auch bedeuten, dass eine an der Schnittstelle anliegende Energieversorgung deaktiviert wird. Dies lässt sich insbesondere bei Ausgestaltungen der Schnittstelle realisieren, bei denen ein angeschlossenes Zusatzgerät über die Schnittstelle mit elektrischer Energie versorgt wird. Auch auf diese Weise wäre ein Betrieb des Zusatzgerätes an der Kommunikationseinheit unterbunden. In der einfachsten Ausgestaltung derartiger elektrisch wirkender Sicherungsmittel sind diese Sicherungsmittel durch mechanische oder elektronische Schalter implementiert.

Mit logisch wirkenden Sicherungsmittel lässt sich das Ansteuern eines Zusatzgeräts über die Schnittstelle auf ein ganz bestimmtes Zusatzgerät oder eine Gruppe von Zusatzgerät beschränken. Gruppen von Zusatzgeräten können beispielsweise durch Geräte eines bestimmten Herstellers, ein bestimmtes Gerätemodell, ein bestimmter Gerätetyp oder bestimmte Klasse von Zusatzgeräten (wie LAN-Schnittstellenadapter oder Powerline-Communication-Adapter) gebildet sein. Ein Fachmann wird unmittelbar erkennen, wie derartige Gruppen von Zusatzgeräten gebildet sein können.

Prinzipiell lassen sich die vorgenannten Sicherungsmittel beliebig kombinieren, um den Schutz gegen unberechtigtes Trennen und/oder Anschließen eines Zusatzgeräts weiter zu erhöhen. So könnte beispielsweise ein logisch wirkendes Sicherungsmittel und ein mechanisch wirkendes Sicherungsmittel gleichzeitig verwendet werden. In diesem Fall könnte das logisch wirkende Sicherungsmittel dafür sorgen, dass lediglich ein ganz bestimmtes Zusatzgerät oder eine ganz bestimmte Klasse von Zusatzgeräten angesteuert wird. Das mechanisch wirkende Sicherungsmittel könnte verhindern, dass ein einmalig angeschlossenes Zusatzgerät lediglich nach Zerstörung des Sicherungsmittels wieder getrennt werden kann.

In einer besonders bevorzugten Ausgestaltung umfasst die Kommunikationseinheit einen Sicherheits-Host-Controller, der als elektrisch und/oder logisch wirkendes Sicherungsmittel fungiert. Dabei steuert der Sicherheits-Host-Controller den Datenaustausch über die Schnittstelle und ist in dieser Grundfunktion mit einem üblichen Host-Controller ohne Sicherungsmittel vergleichbar. Wenn beispielsweise die Schnittstelle durch USB (Universal Serial Bus) gebildet ist, wäre der Sicherheits-Host-Controller ein USB-Host-Controller, der um Sicherheitsfunktionen - nämlich die erfindungsgemäß verwendeten Sicherungsmittel - ergänzt worden ist. Dabei kann der Sicherheits-Host-Controller in einer vollständig abgeschlossenen Einheit, beispielsweise einem IC (Integrated Circuit), implementiert sein. Allerdings ist auch denkbar, dass der Sicherheits-Host-Controller durch einen "Standard"-Host-Controller gebildet ist und dass ein zusätzliches Modul die Sicherheitsfunktionen ergänzt. In diesem Fall könnte der Sicherheits-Host-Controller beispielsweise durch zwei miteinander verbundene ICs gebildet sein. Vorzugsweise ist der Sicherheits-Host-Controller aber eine abgeschlossene Einheit.

Der Sicherheits-Host-Controller ist dazu ausgebildet, abhängig von Konfigurationsdaten ein mit der Schnittstelle verbundenes Zusatzgerät anzusteuern oder abzulehnen. Die Konfigurationsdaten können in einem Speicher, vorzugsweise einem nichtflüchtigen Speicher, abgelegt sein, wobei dieser Speicher Bestandteil des Sicherheits-Host-Controllers sein kann oder dem Sicherheits-Host-Controller zugeordnet sein kann. Die Konfigurationsdaten können von einem Administrator veränderbar ausgebildet sein, so dass auf die anschließbaren Zusatzgeräte Einfluss genommen werden kann. Was die Konfigurationsdaten festlegen, hängt von der jeweiligen Funktion ab, die ein in dem Sicherheits-Host-Controller implementiertes Sicherungsmittel erfüllt.

In einer bevorzugten Ausgestaltung ist der Sicherheits-Host-Controller dazu ausgebildet, die Schnittstelle zu deaktivieren. Hierbei können Konfigurationsdaten eine entsprechende Deaktivierung der Schnittstelle definieren. Eine Deaktivierung könnte bedeuten, dass jegliche Kommunikationssignale, die über die Schnittstelle an den Sicherheits-Host-Controller gesendet werden, nicht beantwortet werden. Der Sicherheits-Host-Controller würde dann sämtliche über die Schnittstelle gesendeten Anfragen ignorieren. Die Deaktivierung kann jedoch auch so weit gehen, dass der Sicherheits-Host-Controller die Treiberstufen für die Schnittstelle deaktiviert oder sich sogar vollständig ausschaltet. Auf diese Weise kann sichergestellt werden, dass bei einer unerwünschten Kommunikation über die Schnittstelle kein angeschlossenes Zusatzgerät durch Manipulationen eine Kommunikation erzwingen kann.

In einer anderen Weiterbildung des Sicherheits-Host-Controllers kann dieser dazu ausgebildet sein, eine über die Schnittstelle für ein angeschlossenes Zusatzgerät bereitgestellte Versorgungsspannung abzuschalten. Einige Schnittstellen, wie beispielsweise bei USB, stellen eine Versorgungsspannung bereit, die ein an die Schnittstelle angeschlossenes Zusatzgerät mit der notwendigen Energie versorgen. Durch Deaktivieren dieser Versorgungsspannung würde das Zusatzgerät die notwendige Energieversorgung nicht erhalten, wodurch ein versuchsweise angeschlossenes Zusatzgerät nicht funktionieren würde. Zwar könnte die Versorgungsspannung bei einem Manipulationsversuch dann auch anderweitig bereitgestellt werden, beispielsweise durch ein separates Netzgerät, allerdings kann auf diese Weise ein testweise angeschlossenes Zusatzgerät wirkungsvoll ignoriert werden.

In einer anderen Weiterbildung ist der Sicherheits-Host-Controller dazu ausgebildet, Identifikationsdaten aus einem mit der Schnittstelle verbundenen Zusatzgerät zu beziehen. Diese Identifikationsdaten können sowohl individuelle Informationen zu dem Zusatzgerät als auch verallgemeinernde Informationen enthalten. So könnte in den Identifikationsdaten beispielsweise der Hersteller des Zusatzgeräts ausgedrückt sein. Andererseits könnte hinterlegt sein, welchen Gerätetyp oder Geräteklasse das Zusatzgerät hat. Zu den individuellen Identifikationsdaten können eine Seriennummer, eine MAC (Media Access Control)-Adresse, eine Hardware-ID, ein Zertifikat oder sonstige Informationen, die eine eineindeutige Identifikation des Zusatzgeräts ermöglichen, umfassen.

Nach Extraktion der Identifikationsdaten aus dem Zusatzgerät kann der Sicherheits-Host-Controller die derart gewonnenen Identifikationsdaten mit Konfigurationsdaten vergleichen. Basierend auf einem Ergebnis des Vergleichs kann eine Kommunikation mit dem über die Schnittstelle verbundenen Zusatzgerät erlaubt oder verweigert werden. In den Konfigurationsdaten können - entsprechend der Granularität des Steuerns der Zugriffe - Identifikationsinformationen hinterlegt sein, die eine Entscheidung über das Ansteuern oder Abweisen des Zusatzgeräts ermöglichen. So kann beispielsweise definiert sein, welche Geräteklassen mit der Schnittstelle der Kommunikationseinheit verbunden werden dürfen und/oder welche ganz speziellen Zusatzgeräte anhand ihrer Seriennummern angesteuert werden dürfen. Der Vergleich kann dabei durch ein einfaches Abgleichen der Identifikationsdaten mit den Konfigurationsdaten erfolgen. Wenn die Konfigurationsdaten identische Informationen wie in den Identifikationsdaten enthalten, würde die Ansteuerung des verbundenen Zusatzgeräts genehmigt. Andernfalls würde ein Zugriff verweigert. Denkbar wäre aber auch, wenn beispielsweise die Identifikationsdaten ein Zertifikat umfassen, dass der Sicherheits-Host-Controller mit dem Zertifikat Verschlüsselungs- und/ oder Entschlüsselungsoperationen durchführt und der Vergleich der Konfigurationsdaten auf diese Weise erfolgt. So könnten die Konfigurationsdaten beispielsweise eine verschlüsselte Information umfassen, die mit dem in dem Zusatzgerät hinterlegten Zertifikat entschlüsselt wird. Nur wenn die Entschlüsselung gelingt, würde der Vergleich der Identifikationsdaten mit den Konfigurationsdaten zu einem positiven Ergebnis führen und dadurch ein Zugriff auf das Zusatzgerät erlauben.

Bei den Konfigurationsdaten kann ergänzend hinterlegt sein, welche "Rechte" ein identifiziertes angeschlossenes Zusatzgerät hat. So könnte definiert sein, dass lediglich Daten zu dem Zusatzgerät gesendet und lediglich Quittierungen von dem Zusatzgerät ausgewertet werden dürfen. Alternativ oder zusätzlich könnte die Art der Kommunikation zwischen Sicherheits-Host-Controller und Zusatzgerät durch die Konfigurationsdaten eingeschränkt sein. So wäre denkbar, dass lediglich bestimmte Betriebsmodi, bestimmte Datenraten und/oder bestimmte Operationen erlaubt sind.

Der Sicherheits-Host-Controller kann zusätzlich einen Zähler aufweisen oder es kann dem Sicherheits-Host-Controller ein Zähler zugeordnet sein. Dieser Zähler könnte die Anzahl verschiedener, mit der Schnittstelle verbundenen Zusatzgeräte erfassen, wobei mit jedem zuvor noch nicht mit dem Sicherheits-Host-Controller verbundenen Zusatzgerät der Zählerstand verändert wird. Ob hierbei eine Erhöhung oder eine Reduzierung des Zählerstands vorgenommen wird, ist weitgehend unerheblich. Wesentlich ist lediglich, dass mit jedem Anschluss eines anderen Zusatzgeräts in die gleiche Richtung gezählt wird. Ohne Beschränkung der Allgemeinheit wird nachfolgend davon ausgegangen, dass der Zählerstand jeweils erhöht wird. Bei Erreichen oder Überschreiten eines vordefinierten Zählwerts des Zählers kann die Kommunikation mit einem über die Schnittstelle verbundenen Zusatzgerät verweigert werden. Auf diese Weise kann noch effektiver der manipulative Anschluss eines Zusatzgeräts unterbunden werden, da der Zähler jeweils aktiv zurückgesetzt werden muss.

Bei Verwendung eines Zählers kann es sinnvoll sein, aus einem Zusatzgerät extrahierte Identifikationsdaten, vorzugsweise individuelle Identifikationsdaten, abzuspeichern. Dies ist insbesondere dann von Bedeutung, wenn der vordefinierte Zählwert einen Anschluss von mehreren unterschiedlichen Zusatzgeräten erlauben soll. Auf diese Weise lässt sich erkennen, ob ein Zusatzgerät bereits zuvor angeschlossen war oder nicht. Bei Erkennen eines angeschlossenen Zusatzgeräts würde der Sicherheits-Host-Controller zunächst Identifikationsdaten aus dem Zusatzgerät extrahieren. Danach würden die Identifikationsdaten mit abgespeicherten Identifikationsdaten verglichen. Wenn die neu extrahierten Identifikationsdaten noch nicht abgespeichert sind, könnten die extrahierten Identifikationsdaten abgespeichert und der Zähler erhöht oder erniedrigt werden. Erst danach würde geprüft, ob das Zusatzgerät an der Schnittstelle der Kommunikationseinheit angeschlossen werden darf. Durch diese Herangehensweise würden auch versuchsweise angeschlossene Zusatzgeräte mitgezählt.

Zusätzlich oder alternativ kann der Sicherheits-Host-Controller ein Authentifikationsmodul umfassen. Dadurch kann der Sicherheits-Host-Controller eine Kommunikation mit einem angeschlossenen Zusatzgerät bis zu einer erfolgreichen Authentifikation verweigern. Eine derartige Authentifikation kann beispielsweise über eine Zeichenkette erfolgen, die im Sinne eines Passwortes eine Authentifikation bei dem Sicherheits-Host-Controller gewährleistet. Es wäre auch denkbar, dass ein Zertifikat in dem Zusatzgerät hinterlegt ist und der Sicherheits-Host-Controller dieses Zertifikat ausschließt und für eine Authentifikation verwendet. Denkbar wäre, dass das Zertifikat zu einem Schlüsselpaar gehört, von dem ein Teil in dem Sicherheits-Host-Controller und der andere Teil in dem Zusatzgerät abgelegt ist. Nur wenn die beiden Teile zusammenpassen, wäre die Authentifikation erfolgreich. Entsprechende Authentifikationsverfahren sind aus der Praxis hinlänglich bekannt.

Prinzipiell kann die Schnittstelle der Kommunikationseinheit auf verschiedenste Weise gebildet sein. Wesentlich ist, dass die Schnittstelle hot-plug-fähig ist, d.h. dass ein Zusatzgerät im laufenden Betrieb der Kommunikationseinheit mit der Kommunikationseinheit verbunden werden kann. Derartige Schnittstellen sind jedoch weit verbreitet. Zum Gewährleisten eines möglichst kompakten Steckverbinders und einer ausfallsicheren Verbindung des Zusatzgeräts ist die Schnittstelle vorzugsweise seriell ausgebildet. Dabei ist die Schnittstelle in ganz besonders bevorzugter Weise als serieller Bus ausgebildet. Eine ganz besonders bevorzugte Ausgestaltung eines derartigen seriellen Busses ist USB - Universal Serial Bus. Welche USB-Version verwendet wird, ist weitgehend unerheblich. Die Wahl des Standards wird im Wesentlichen davon abhängen, welche Datenraten zwischen der Kommunikationseinheit und dem Zusatzgerät zu realisieren sind. In einer bevorzugten Variante kommt jedoch USB 3, dort insbesondere USB 3.1, zum Einsatz. USB 3.1 hat den entscheidenden Vorteil, dass in dem Standard eine verschraubbare Variante bekannt ist, bei der eine oder zwei Schrauben den Schnittverbinder im Sinne eines Verriegelungselements gegen Abziehen des Steckers von der Buchse sichern.

Zum Bereitstellen eines mechanisch wirkenden Sicherungsmittels könnte an dem Gehäuse der Kommunikationseinheit eine Öse oder eine Durchführung ausgebildet sein, durch die eine Plombe zum Sichern des Steckverbinders zwischen Zusatzgerät und Kommunikationseinheit führbar ist.

Durch Kombination einer erfindungsgemäßen Kommunikationseinheit mit einem Zusatzgerät kann ein erfindungsgemäßes System gebildet werden. Das Zusatzgerät ist über eine Steckverbindung mit einer Schnittstelle der Kommunikationseinheit verbunden und übernimmt einen Teil der Kommunikationsfunktion der Kommunikationseinheit. Auf diese Weise erfüllen die Kombinationseinheiten und das Zusatzgerät gemeinsam eine bereitzustellende Kommunikationsfunktion.

Das Zusatzgerät kann verschiedentliche Kommunikationsfunktionen übernehmen. Vorzugsweise ist die Kommunikationsfunktion jedoch eine Anbindung an ein drahtgebundenes oder funkbasiertes Netzwerk. In diesem Fall fungiert das Zusatzgerät als Schnittstellenadapter. Bevorzugte Ausgestaltungen derartiger Netzwerke sind Ethernet, WLAN (Wireless Local Area Network), Mobilfunk, insbesondere GSM (Global System for Mobile Communications), UMTS (Universal Mobile Telecommunications System) oder LTE (Long Term Evolution). Das Netzwerk könnte auch durch Powerline-Communication aufgespannt sein, d.h. die Daten werden mittels speziell modulierter Powerline-Signale über gewöhnliche Energieversorgungsleitungen übertragen. Entsprechende Techniken und Netzwerke sind aus dem Stand der Technik hinlänglich bekannt.

Prinzipiell ist denkbar, dass das Zusatzgerät durch marktübliche Zusatzgeräte für den Anschluss an die Schnittstelle der Kommunikationseinheit gebildet ist. Wenn die Schnittstelle beispielsweise durch USB und das zu verbindende Netzwerk durch Ethernet gebildet ist, sind USB-zu-Ethernet-Adapter, die prinzipiell als Zusatzgerät in dem erfindungsgemäßen System verwendet werden können, kommerziell verfügbar. Wesentlich ist jedoch, dass die durch die Kommunikationseinheit bereitgestellten Sicherungsmittel ausreichend sicher greifen. Dies bedeutet beispielsweise, dass das Zusatzgerät ausreichend geeignete Identifikationsdaten zur Extraktion durch einen Sicherheits-Host-Controller bereitstellt. Es wäre allerdings auch denkbar, dass speziell ausgebildete Zusatzgeräte verwendet werden, die durch Speicher mit entsprechenden Identifikationsdaten ergänzt sind oder die Module zum Bereitstellen einer sicheren Authentifikation umfassen.

Das System kann zudem eine Plombe umfassen, die als Sicherungsmittel fungiert. Die Plombe kann dabei einen Zugang zu einem Steckverbinder an der Kommunikationseinheit, das Lösen des Steckverbinders und/oder das Lösen eines an dem Steckverbinder angebrachten Verriegelungselements verhindern. Hierzu kann ergänzend eine Öse oder eine Durchführung an dem Gehäuse der Kommunikationseinheit verwendet werden.

Vorzugsweise sind Kommunikationseinheit und Zusatzgerät dabei in separaten Gehäusen angeordnet. Auf diese Weise kann die gewünschte Modularität weiter verbessert werden.

In einer Weiterbildung des Systems könnte dort eine Konfigurationseinheit vorgesehen sein, die eine Anpassung von Konfigurationsdaten für die Kommunikationseinheit erlaubt. Dabei kann die Konfigurationseinheit derart ausgebildet sein, dass die Konfigurationseinheit durch einen Service-Techniker lokal an der Kommunikationseinheit angeschlossen wird, wenn eine Änderung an Konfigurationsdaten vorgenommen werden soll. Vorzugsweise ist die Konfigurationseinheit jedoch entfernt von der Kommunikationseinheit angeordnet und erlaubt damit eine Fernadministration der Kommunikationseinheit. Dabei kann eine Konfigurationseinheit für mehrere Kommunikationseinheiten verwendet werden. Zum Schutz unberechtigter Änderungen von Konfigurationsdaten könnten besondere Sicherungsmaßnahmen ergriffen werden. So wäre denkbar, dass zwischen der Konfigurationseinheit und der/den Kommunikationseinheit/en eine verschlüsselte Verbindung, beispielsweise als SSL (Secure Socket Layer)-Verbindung oder als VPN (Virtual Private Network)-Tunnel, aufgebaut wird. Nur wenn Daten über eine derartige Verbindung ankommen, wird die Kommunikationseinheit die Änderungen akzeptieren. Ergänzend kann beispielsweise noch ein Login vorgesehen sein, bei dem sich der Servicetechniker mit einem Benutzernamen und einem Kennwort authentifiziert.

Es gibt nun verschiedene Möglichkeiten, die Lehre der vorliegenden Erfindung in vorteilhafter Weise auszugestalten und weiterzubilden. Dazu ist einerseits auf die den nebengeordneten Ansprüchen nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: ein Blockdiagramm mit verschiedenen Funktionseinheiten eines Smart-Meter-Gateways mit einem USB-C-Anschluss,
- Fig. 2: ein Blockdiagramm mit verschiedenen Funktionseinheiten eines erfindungsgemäßen SmartMeter-Gateways mit einem USB-Anschluss und einem Sicherheits-Host-Controller zur elektrischen und/oder logischen Sicherung gegen Manipulation mit einem angeschlossenen Ethernet-Adapter,
- Fig. 3: ein Blockdiagramm entsprechend Fig. 2, wobei statt des Ethernet-Adapters ein LTE-Schnittstellenadapter als Zusatzgerät angeschlossen ist.

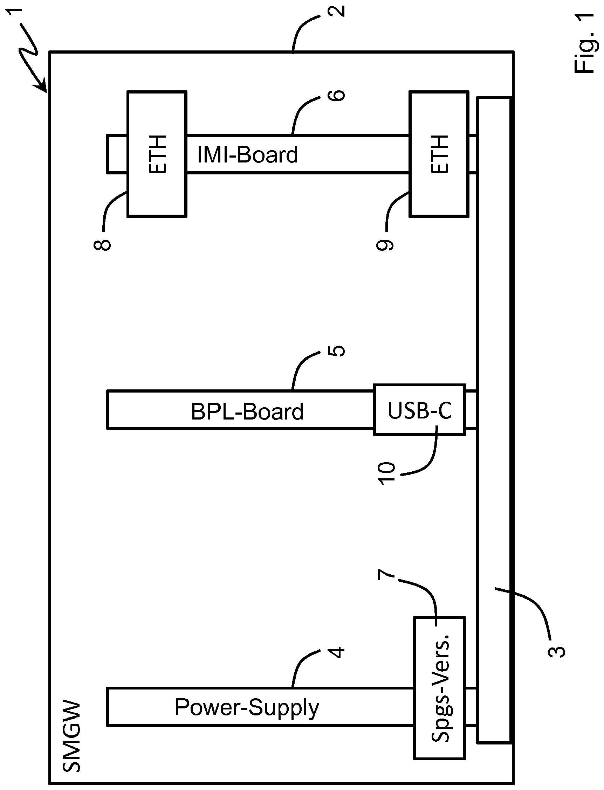

Fig. 1 zeigt ein Blockdiagramm mit verschiedenen Funktionseinheiten eines SmartMeter-Gateways (SMGW). Das SMGW 1 besteht aus einem symbolisch als Rechteck dargestellten Gehäuse 2, in dem die Elektronik des SMGWs 1 auf insgesamt vier Platinen angeordnet ist. Eine Basisplatine 3 dient zur Verbindung einer Energieversorgungsplatine 4, einer Breitband-Powerline-Platine 5 ("BPL-Board") und eines SMGW-Integrationsmoduls 6 ("IMI-Board"). Die Energieversorgungsplatine 4 umfasst einen Energieversorgungsanschluss 7, an den eine Energieversorgung anschließbar ist. Eine derartige Energieversorgung kann beispielsweise durch ein einphasiges Wechselspannungsnetzwerk mit einem Effektivwert von 230V gebildet sein. Die Energieversorgungsplatine 4 erzeugt aus der an dem Energieversorgungsanschluss 7 anliegenden Spannung eine oder mehrere Spannungen, die für den Betrieb des SMGWs 1 benötigt werden. Die erzeugten Spannungen werden über die Basisplatine 3 zu den anderen Platinen des SMGWs 1 verteilt.

In dem SMGW-Integrationsmodul 6 sind alle die Bestandteile des SMGWs 1 implementiert, die einer Zertifizierung bedürfen. Daher weist das SMGW-Integrationsmodul 6 zwei Ethernet-Anschlüsse 8, 9 auf, die einen Anschluss zu dem HAN und dem LMN bereitstellen können. Die Verbindung zum WAN ist über die BPL-Platine 5 gebildet. Dabei kann die BPL-Platine 5 für die Kommunikation primär Breitband-Powerline nutzen, d.h. die zu übertragenden Daten werden über die mit dem Energieversorgungsanschluss 7 verbundene Energieversorgung übertragen.

Die BPL-Platine 5 weist einen USB-Anschluss 10 auf, an den ein Zusatzgerät anschließbar ist. Der USB-Anschluss 10 bildet eine Schnittstelle zum Anschließen eines Zusatzgerätes mittels einer Steckverbindung. Dieses hier nicht eingezeichnete Zusatzgerät kann beispielsweise durch ein USB-zu-Ethernet-Adapter gebildet sein. Mittels des Zusatzgeräts kann ein sekundärer Kommunikationsweg zu dem WAN bereitgestellt werden. Vorzugsweise ist der USB-Anschluss 10 als USB-C-Anschluss mit Verschraubung ausgebildet ist, d.h. die USB-C-Buchse an dem SMGW weist eine oder zwei Gewindebuchsen auf, in die jeweils eine Schraube an dem USB-C-Stecker als Verriegelungselemente eingeschraubt werden können. Eine hier nicht eingezeichnete Plombe kann als mechanisch wirkendes Sicherungsmittel fungieren und den USB-Stecker gegen unberechtigtes Trennen und Austauschen des Zusatzgeräts sichern. Zusätzlich oder alternativ ist denkbar, dass das Gehäuse des SMGWs eine Öse oder eine Durchführung aufweist, durch die eine Plombe geführt ist. Die Plombe könnte dabei ergänzend zur Sicherung des Verriegelungselement durch die Öse bzw. Durchführung geführt werden. Alternativ könnte die Plombe um das USB-Anschlusskabel geführt sein, so dass ein Abziehen des USB-Steckers (mit oder ohne Verriegelungselemente) verhindert ist. Auf diese Weise kann ein Ausführungsbeispiel eines erfindungsgemäßen Systems gebildet sein.

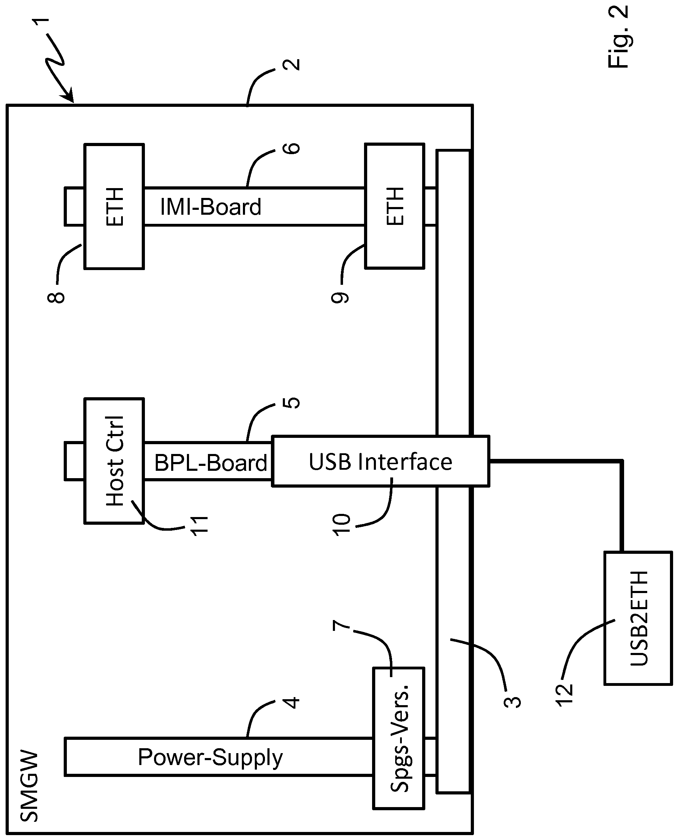

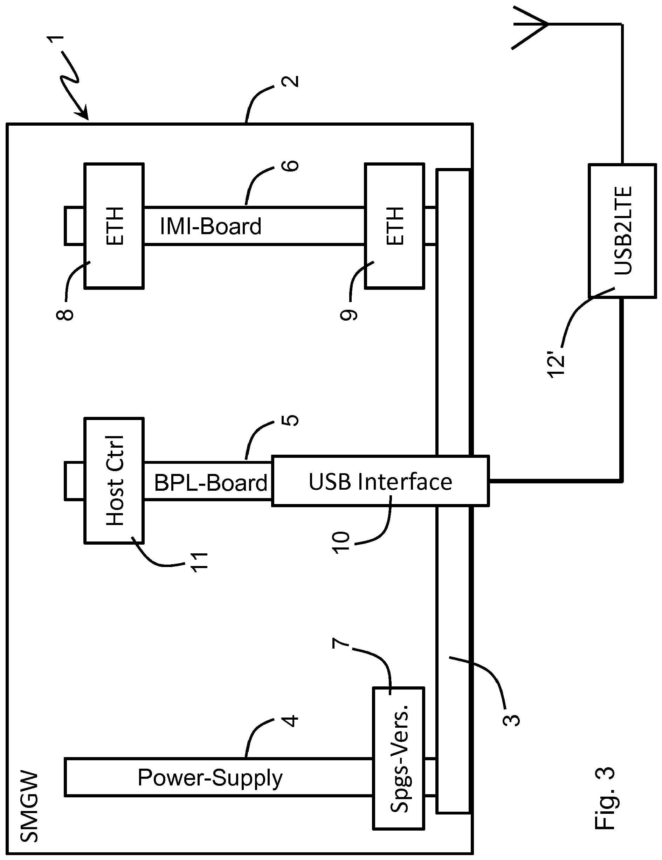

Die Figuren 2 und 3 zeigen eine andere Ausgestaltung einer erfindungsgemäßen Kommunikationseinheit. Die BPL-Platine 5 weist wiederum einen USB-Anschluss 10 auf, der als USB-C oder eine andere USB-Variante ausgebildet ist. Zum Steuern der Kommunikation über den USB-Anschluss 10 weist die BPL-Platine zusätzlich einen Sicherheits-Host-Controller 11 auf, der in seiner Grundfunktion einem USB-Host-Controller entspricht. Zusätzlich sind in dem Sicherheits-Host-Controller Sicherungsmittel implementiert, mit denen gezielt der Anschluss bzw. der Betrieb von nicht zulässiger Zusatzgeräten 12 unterbunden werden. Fig. 2 zeigt eine Variante, bei der das Zusatzgerät 12 durch ein USB-Ethernet-Adapter (USB2ETH) gebildet ist. In Fig. 3 ist eine zweite Variante mit einem USB-LTE-Adapter (USB2LTE) mit zugehöriger Antenne als Zusatzgerät 12'.

Damit kann die USB-Buchse die Hardware-Grenze eines zertifizierten Gerätes darstellen. Softwareseitig ist ein Host-Treiber die Stelle, die die verschiedenen Arten von Adaptern einbindet und die Kommunikation ermöglicht. An die Buchse selbst können verschiedene Adapter angeschlossen werden, die wiederum unterschiedliche Schnittstellen (beispielsweise Ethernet, GSM (Global System for Mobile Communication), LTE (Long Term Evolution) usw.) zur Verfügung stellen.

Hinsichtlich weiterer vorteilhafter Ausgestaltungen der erfindungsgemäßen Kommunikationseinheit bzw. des erfindungsgemäßen Systems wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: SmartMeter-Gateway
- 2: Gehäuse
- 3: Basisplatine
- 4: Energieversorgungsplatine
- 5: BPL-Platine
- 6: SMGW-Integrationsmodul
- 7: Energieversorgungsanschluss
- 8: Ethernet-Anschluss
- 9: Ethernet-Anschluss
- 10: USB-Anschluss
- 11: Sicherheits-Host-Controller
- 12: Zusatzgerät

## Patentansprüche

1. Kommunikationseinheit zum Bereitstellen einer Kommunikationsfunktion, wobei die Kommunikationseinheit ein SmartMeter-Gateway (1) ist und die bereitgestellte Kommunikationsfunktion das Steuern der Kommunikation zwischen mehreren mit der Kommunikationseinheit verbundenen Netzwerke umfasst und wobei die Kommunikationseinheit mindestens eine Schnittstelle aufweist, die einen Datenaustausch mit einem mittels einer Steckverbindung verbindbaren Zusatzgerät (12, 12') ermöglicht,
**dadurch gekennzeichnet, dass** sich die Kommunikationseinheit bei dem Bereitstellen der Kommunikationsfunktion zumindest teilweise eines über die Schnittstelle (10) verbundenen Zusatzgeräts (12, 12') bedient und dass mindestens ein Sicherungsmittel bereitgestellt ist, das derart mit der Kommunikationseinheit zusammenwirkt, dass ein unberechtigtes Anschließen und/oder Trennen eines Zusatzgeräts (12, 12') an der Schnittstelle verhindert oder zumindest erschwert wird.

2. Kommunikationseinheit nach Anspruch 1, **dadurch gekennzeichnet, dass** das mindestens eine Sicherungsmittel mechanisch, elektrisch und/oder logisch wirkt.

3. Kommunikationseinheit nach Anspruch 1 oder 2, **gekennzeichnet durch** einen Sicherheits-Host-Controller (11), der als Sicherungsmittel fungiert und einen Datenaustausch über die Schnittstelle (10) steuert, wobei der Sicherheits-Host-Controller (11) dazu ausgebildet ist, abhängig von Konfigurationsdaten ein mit der Schnittstelle (10) verbundenes Zusatzgerät (12, 12') anzusteuern oder abzulehnen.

4. Kommunikationseinheit nach Anspruch 3, **dadurch gekennzeichnet, dass** der Sicherheits-Host-Controller (11) dazu ausgebildet ist, die Schnittstelle (10) zu deaktivieren und/oder eine über die Schnittstelle (10) für ein angeschlossenes Zusatzgerät (12, 12') bereitgestellte Versorgungsspannung abzuschalten.

5. Kommunikationseinheit nach Anspruch 3 oder 4, **dadurch gekennzeichnet, dass** der Sicherheits-Host-Controller (11) dazu ausgebildet ist, ein mit der Schnittstelle (10) verbundenes Zusatzgerät (12, 12') und/oder dessen Gerätetyp zu identifizieren, derart gewonnene Identifikationsdaten mit Konfigurationsdaten zu vergleichen und basierend auf einem Ergebnis des Vergleichs eine Kommunikation mit dem über die Schnittstelle (10) verbundenen Zusatzgeräts (12, 12') zu erlauben oder zu verweigern, wobei die Konfigurationsdaten vorzugsweise eine Geräteklasse und/oder eine Identifikationsnummer eines erlaubten Zusatzgeräts umfasst/umfassen.

6. Kommunikationseinheit nach einem der Ansprüche 3 bis 5, **dadurch gekennzeichnet, dass** der Sicherheits-Host-Controller (11) einen Zähler aufweist oder dass dem Sicherheits-Host-Controller (11) ein Zähler zugeordnet ist, wobei der Zähler die Anzahl verschiedener mit der Schnittstelle (10) verbundenen Zusatzgeräte (12, 12') erfasst und wobei der Sicherheits-Host-Controller (11) dazu ausgebildet ist, bei Erreichen oder Überschreiten eines vordefinierten Zählwerts des Zählers eine Kommunikation mit dem über die Schnittstelle verbundenen Zusatzgerät zu erlauben oder zu verweigern.

7. Kommunikationseinheit nach einem der Ansprüche 3 bis 6, **dadurch gekennzeichnet, dass** der Sicherheits-Host-Controller (11) ein Authentifikationsmodul umfasst, wobei der Sicherheits-Host-Controller (11) dazu ausgebildet ist, eine Kommunikation mit einem angeschlossenen Zusatzgerät (12, 12') erst nach erfolgreicher Authentifikation zu erlauben.

8. Kommunikationseinheit nach einem der Ansprüche 1 bis 7, **dadurch gekennzeichnet, dass** die Schnittstelle (10) durch einen seriellen Bus, vorzugsweise durch USB - Universal Serial Bus - gebildet ist.

9. Kommunikationseinheit nach einem der Ansprüche 1 bis 8, **dadurch gekennzeichnet, dass** die Sicherungsmittel eine Öse oder eine Durchführung umfassen, durch die eine Plombe zum Sichern des Steckverbinders führbar ist.

10. System mit einer Kommunikationseinheit nach einem der Ansprüche 1 bis 9 und einem Zusatzgerät, wobei das Zusatzgerät (12, 12') über eine Steckverbindung mit einer Schnittstelle (10) der Kommunikationseinheit verbunden ist und wobei die Kommunikationseinheit und das Zusatzgerät (12, 12') gemeinsam eine Kommunikationsfunktion bereitstellen.

11. System nach Anspruch 10, **dadurch gekennzeichnet, dass** das Zusatzgerät (12, 12') ein Schnittstellenadapter zum Anbinden der Kommunikationseinheit an ein kabelgebundenes Netzwerk oder Funk-Netzwerk ist, wobei das Netzwerk vorzugsweise durch Ethernet, WLAN (Wireless Local Area Network), Mobilfunk, insbesondere GSM (Global System for Mobile communication), UMTS (Universal Mobile Telecommunication System) oder LTE (Long Term Evolution), oder Powerline-Communication gebildet ist.

12. System nach Anspruch 10 oder 11, **gekennzeichnet durch** eine Plombe, die als Sicherungsmittel fungiert, wobei die Plombe einen Zugang zu einem Steckverbinder an der Kommunikationseinheit verhindert, oder wobei die Plombe ein Lösen des Steckverbinders verhindert, oder wobei die Plombe ein Verriegelungselement an dem Steckverbinder gegen Lösen des Verriegelungselements sichert.

13. System nach einem der Ansprüche 10 bis 12, **dadurch gekennzeichnet, dass** die Kommunikationseinheit und das Zusatzgerät in separaten Gehäusen untergebracht sind und/oder dass das Zusatzgerät prinzipiell austauschbar ist.

14. System nach einem der Ansprüche 10 bis 13, **dadurch gekennzeichnet, dass** das System ergänzend eine Konfigurationseinheit aufweist, mittels der Konfigurationsdaten innerhalb der Kommunikationseinheit veränderbar sind.

## Claims

1. Communication device for providing a communication function, wherein the communication unit is a Smart Meter Gateway (1) and the communication function provided involves controlling the communication between a plurality of networks which are connected to the communication unit and wherein the communication unit has at least one interface which enables a data exchange with an auxiliary device (12, 12') which can be connected by means of a plug type connection,
**characterised in that** the communication unit uses while providing the communication function at least partially an auxiliary device (12, 12') which is connected by means of the interface (10), and **in that** there is provided at least one security means which cooperates with the communication unit in such a manner that unauthorised connection and/or separation of an auxiliary device (12, 12') to/from the interface is prevented or at least made difficult.

2. Communication unit according to claim 1, **characterised in that** the at least one security means acts mechanically, electrically and/or logically.

3. Communication unit according to claim 1 or claim 2, **characterised by** a security host controller (11) which acts as a security means and which controls a data exchange via the interface (10), wherein the security host controller (11) is constructed to control or decline an auxiliary device (12, 12') which is connected to the interface (10) depending on configuration data.

4. Communication unit according to claim 3, **characterised in that** the security host controller (11) is constructed to deactivate the interface (10) and/or to switch off a supply voltage which is provided via the interface (10) for a connected auxiliary device (12, 12').

5. Communication unit according to claim 3 or claim 4, **characterised in that** the security host controller (11) is constructed to identify an auxiliary device (12, 12') which is connected to the interface (10) and/or the device type, to compare identification data obtained in this manner with configuration data and, based on a result of the comparison, to enable or deny a communication with the auxiliary device (12, 12') which is connected via the interface (10), wherein the configuration data preferably comprise a device class and/or an identification number of a permitted auxiliary device.

6. Communication unit according to any one of claims 3 to 5, **characterised in that** the security host controller (11) has a counter or **in that** a counter is associated with the security host controller (11), wherein the counter detects the number of different auxiliary devices (12, 12') which are connected to the interface (10), and wherein the security host controller (11) is constructed, when a predefined counter value of the counter is reached or exceeded, to permit or deny a communication with the auxiliary device which is connected via the interface.

7. Communication unit according to any one of claims 3 to 6, **characterised in that** the security host controller (11) comprises an authentication module, wherein the security host controller (11) is constructed to permit communication with a connected auxiliary device (12, 12') only after successful authentication.

8. Communication unit according to any one of claims 1 to 7, **characterised in that** the interface (10) is formed by a serial bus, preferably by means of a USB - Universal Serial Bus.

9. Communication unit according to any one of claims 1 to 8, **characterised in that** the security means comprise a lug or a passage through which a seal can be guided in order to secure the plug type connector.

10. System having a communication unit according to any one of claims 1 to 9 and an auxiliary device, wherein the auxiliary device (12, 12') is connected via a plug type connection to an interface (10) of the communication unit and wherein the communication unit and the auxiliary device (12, 12') together provide a communication function.

11. System according to claim 10, **characterised in that** the auxiliary device (12, 12') is an interface adapter for connecting the communication unit to a cable-bound network or a radio network, wherein the network is preferably formed by means of Ethernet, WLAN (Wireless Local Area Network), Mobile Communications, in particular GSM (Global System for Mobile Communications), UMTS (Universal Mobile Telecommunications System) or LTE (Long Term Evolution), or Powerline communication.

12. System according to claim 10 or claim 11, **characterised by** a seal, which acts as a security means, wherein the seal prevents access to a plug type connector on the communication unit, or wherein the seal prevents release of the plug type connector, or wherein the seal secures a locking element on the plug type connector against release of the locking element.

13. System according to any one of claims 10 to 12, **characterised in that** the communication unit and the auxiliary device are accommodated in separate housings and/or in that the auxiliary device can be replaced in principle.

14. System according to any one of claims 10 to 13, **characterised in that** the system additionally has a configuration unit by means of which configuration data within the communication unit can be changed.

## Revendications

1. Unité de communication pour la mise à disposition d'une fonction de communication, l'unité de communication étant une passerelle SamrtMeter (1) et la fonction de communication mise à disposition comprenant le contrôle de la communication entre plusieurs réseaux reliés avec l'unité de communication et l'unité de communication comprenant au moins une interface qui permet un échange de données avec un appareil supplémentaire (12, 12') pouvant être relié au moyen d'une liaison enfichable,
**caractérisé en ce que** l'unité de communication commande, lors de la mise à disposition de la fonction de communication, au moins partiellement un des appareils supplémentaires (12, 12') reliés par l'intermédiaire de l'interface (10) et **en ce qu'**au moins un moyen de sécurisation est mis à disposition, qui interagit avec l'unité de communication de façon à empêcher ou au moins rendre plus difficile une connexion non autorisée et/ou une déconnexion d'un appareil supplémentaire (12, 12') de l'interface.

2. Unité de communication selon la revendication 1, **caractérisée en ce que** l'au moins un moyen de sécurisation agit de manière mécanique, électrique et/ou logique.

3. Unité de communication selon la revendication 1 ou 2, **caractérisée par** un contrôle d'hôte de sécurité (11), qui sert de moyen de sécurisation et qui contrôle un échange de données par l'intermédiaire de l'interface (10), le contrôleur d'hôte de sécurité (11) étant conçu pour contrôler ou refuser, en fonction des données de configuration, un appareil supplémentaire (12, 12') relié avec l'interface (10).

4. Unité de communication selon la revendication 3, **caractérisée en ce que** le contrôleur d'hôte de sécurité (11) est conçu pour désactiver l'interface (10) et/ou pour couper une tension d'alimentation mise à disposition par l'intermédiaire de l'interface (10) pour un appareil supplémentaire (12, 12') raccordé.

5. Unité de communication selon la revendication 3 ou 4, **caractérisée en ce que** le contrôleur d'hôte de sécurité (11) est conçu pour identifier un appareil supplémentaire (12, 12') relié avec l'interface (10) et/ou son type d'appareil, pour comparer les données d'identification ainsi obtenues avec des données de configuration et, sur la base d'un résultat de la comparaison, de permettre ou de refuser une communication avec l'appareil supplémentaire (12, 12') relié avec l'interface (10), les données de configuration comprenant de préférence une classe d'appareils et/ou un numéro d'identification d'un appareil supplémentaire autorisé.

6. Unité de communication selon l'une des revendications 3 à 5, **caractérisée en ce que** le contrôleur d'hôte de sécurité (11) comprend un compteur ou **en ce que**, au contrôleur d'hôte de sécurité (11) correspond un compteur, le compteur comptant le nombre des différents appareils supplémentaires (12, 12') reliés avec l'interface (10) et le contrôleur d'hôte de sécurité (11) étant conçu pour autoriser ou refuser, lors de l'atteinte ou du dépassement d'une valeur de comptage prédéfinie du compteur, une communication avec l'appareil supplémentaire relié par l'intermédiaire de l'interface.

7. Unité de communication selon l'une des revendications 3 à 6, **caractérisée en ce que** le contrôleur d'hôte de sécurité (11) comprend un module d'authentification, le contrôleur d'hôte de sécurité (11) étant conçu pour ne permettre une communication avec un appareil supplémentaire (12, 12') raccordé qu'après une authentification réussie.

8. Unité de communication selon l'une des revendications 1 à 7, **caractérisée en ce que** l'interface (10) est constituée d'un bus série, de préférence d'un USB, Universal Sériai Bus.

9. Unité de communication selon l'une des revendications 1 à 8, **caractérisée en ce que** les moyens de sécurisation comprennent un oeillet ou un passage à travers lequel peut être guidé un plombage pour la sécurisation du connecteur.

10. Système avec une unité de communication selon l'une des revendications 1 à 9, et un appareil supplémentaire, l'appareil supplémentaire (12, 12') étant relié par l'intermédiaire d'une connexion enfichable avec une interface (10) de l'unité de communication et l'unité de communication et l'appareil supplémentaire (12, 12') mettant ensemble à disposition une fonction de communication.

11. Système selon la revendication 10, **caractérisé en ce que** l'appareil supplémentaire (12, 12') est un adaptateur d'interface pour la connexion de l'unité de communication à un réseau filaire ou un réseau radio, le réseau étant constitué de préférence par une communication Ethernet, WLAN (Wireless Local Area Nertwork), de téléphonie mobile, plus particulièrement GSM (Global System for Mobile Communication), UMTS (Universal Mobile Télécommunication System) ou LTE (Long Term Evolution), ou Powerline.

12. Système selon la revendication 10 ou 11, **caractérisé par** un plombage fonctionnant comme un moyen de sécurisation, le plombage empêchant un accès à un connecteur sur l'unité de communication ou le plombage empêchant un détachement du connecteur ou le plombage sécurisant un élément de verrouillage sur le connecteur contre un détachement de l'élément de verrouillage.

13. Système selon l'une des revendications 10 à 12, **caractérisé en ce que** l'unité de communication et l'appareil supplémentaire sont logés dans des boîtiers séparés et/ou **en ce que** l'appareil supplémentaire est en principe interchangeable.

14. Système selon l'une des revendications 10 à 13, **caractérisé en ce que** le système comprend, en complément, une unité de configuration au moyen de laquelle des données de configurations peuvent être modifiées à l'intérieur de l'unité de c
